Europäisches Patentamt

European Patent Office

Office européen des brevets

(11) Publication number: **0 058 997**
**B1**

(12) **EUROPEAN PATENT SPECIFICATION**

(45) Date of publication of patent specification: **27.12.85**

(21) Application number: **82101443.8**

(22) Date of filing: **25.02.82**

(51) Int. Cl.⁴: **G 06 F 7/52, G 10 L 9/00**

(54) **Digital processing circuit having a multiplication function.**

(30) Priority: **25.02.81 JP 26499/81**

(43) Date of publication of application:
**01.09.82 Bulletin 82/35**

(45) Publication of the grant of the patent:
**27.12.85 Bulletin 85/52**

(84) Designated Contracting States:
**DE FR GB**

(56) References cited:
**GB-A-1 540 945**
**US-A-4 209 836**

(73) Proprietor: **NEC CORPORATION**
**33-1, Shiba 5-chome, Minato-ku**
**Tokyo 108 (JP)**

(72) Inventor: **Machida, Toshiaki**
**c/o Nippon Electric Co., Ltd. 33-1, Shiba**
**Gochome**
**Minato-ku Tokyo (JP)**

(74) Representative: **Glawe, Delfs, Moll & Partner**
**Patentanwälte**
**Postfach 26 01 62 Liebherrstrasse 20**
**D-8000 München 26 (DE)**

Courier Press, Leamington Spa, England.

## Description

The present invention relates to a digital processing circuit comprising: first means for storing a multiplicand therein; second means for storing a multiplier therein; third means for decoding the multiplier read out of said second means according to the Booth's algorithm to thereby produce coefficients; fourth means coupled to said third means and said first means for producing partial products by multiplying the multiplicand by said coefficients; fifth means having first and second input sections for executing addition of first and second inputs received at said first input section and said second input section respectively, said first input section being coupled to said fourth means and receiving said partial products as said first input; sixth means for receiving a result of addition from said fifth means and feeding back this result to said second input section of said fifth means as said second input of said fifth means; and seventh means coupled to said fifth means of said sixth means for outputting a result of multiplication.

A digital processing circuit of this kind is known from US—PS 42 09 836. This digital processing circuit particularly has been developed for digitally synthesizing human speech. In this processing circuit speech coefficients are stored as a multiplier in a suitable stack. Then these coefficients are supplied to a fourth means preferably performing a Booth's algorithm on the coefficients, before these coefficients are applied to a multiplying means. The result of the multiplication is then further process in a summer and a delay stack and is outputted via a latch to be further processed. Such a processing circuit particularly is suitable for processing signals in a low frequency band such as speeches. In such processing for low frequency signals it is desirable to reduce the number of circuit elements rather than to realize high speed processing. i.e. it is desired to have a processing circuit constructed of simple hardware elements. Therefore the known processing circuit operates at a rather slow speed. This is disadvantageous since in single processing circuits often a high speed operation is desired.

Therefore it is the object of the present invention to provide a digital processing circuit of the above mentioned kind, the operation of which is increased in speed without losing the advantage of a simple hardware structure.

This object is solved according to the present invention by further providing an eighth means coupled between said second means and said third means for receiving the multiplier from said second means and simultaneously sending a plurality of consecutive bits of the received multiplier in parallel to said third means, said eighth means including a circuit having a function of temporarily storing one bit within said consecutive bits which have been previously sent to said third means and sending the stored bit to said third means together with a plurality of bits to be sent to said third means at a next timing.

By providing this eighth means the decoding operation is speeded up by simultaneously applying a plurality of consecutive bits of a multiplier to the decoder. Particularly since one bit of the consecutive bits to be applied to the decoder must be used two times, the circuit has a temporarily storing function besides a shifting function. As result, coefficient data necessary to produce a partial product can be obtained at a high speed. Furthermore by employing the eighth means, the timing control of the decoding operation, the multiplying operation and the latching operation comes very easy when in a preferred embodiment a clock generator is provided producing a timing clock signal for simultaneously controlling both the operation of said eighth means and the operation of said sixth means. Since the timing of the eighth means and the sixth means is maintained in a synchronized relation, erroneous operations can be prevented without strictly controlling the timings for each of these circuits. Accordingly, timing controls extremely easy.

The above-mentioned and other objects, features and advantages of the present invention will become more apparent by reference to the following description of preferred embodiments of the invention taken in conjunction with the accompanying drawings, wherein:

Fig. 1 is a schematic view showing a multiplication process based on the heretofore well known multiplication algorithm;

Fig. 2 is a block diagram of a heretofore known multiplier circuit in which a multiplication based on the Booth's algorithm is executed;

Fig. 3 is a block diagram of a multiplier circuit making use of the Booth's algorithm;

Fig. 4 is an operation timing chart for the multiplier circuit in Fig. 3;

Fig. 5 is a block diagram showing a multiplier circuit making use of the Booth's algorithm according to preferred embodiment of the present invention;

Fig. 6 is a novel circuit diagram of a Booth's decoder and a shift register to be used in the multiplier circuit shown in Fig. 5;

Fig. 7 is a timing chart showing operations in a multiplication processing by making use of the multiplier circuit in Fig. 5;

Fig. 8 is a formant frequency characteristic diagram showing a frequency and energy for a speech;

Fig. 9 is a block diagram of a speech synthesizer system employing a formant system;

Fig. 10 is a circuit diagram of one stage section in a digital filter to be used in the speech synthesizer system in Fig. 9;

Fig. 11 is a block diagram showing detail of the speech synthesizer system in Fig. 9;

Fig. 12 is a state diagram of speech information to be set in the multiplication shift register shown in Fig. 11;

Fig. 13 is a block diagram showing details of one example of a multiplier circuit according to the present invention, and

Fig. 14 is an operation timing chart for the multiplier circuit shown in Fig. 13.

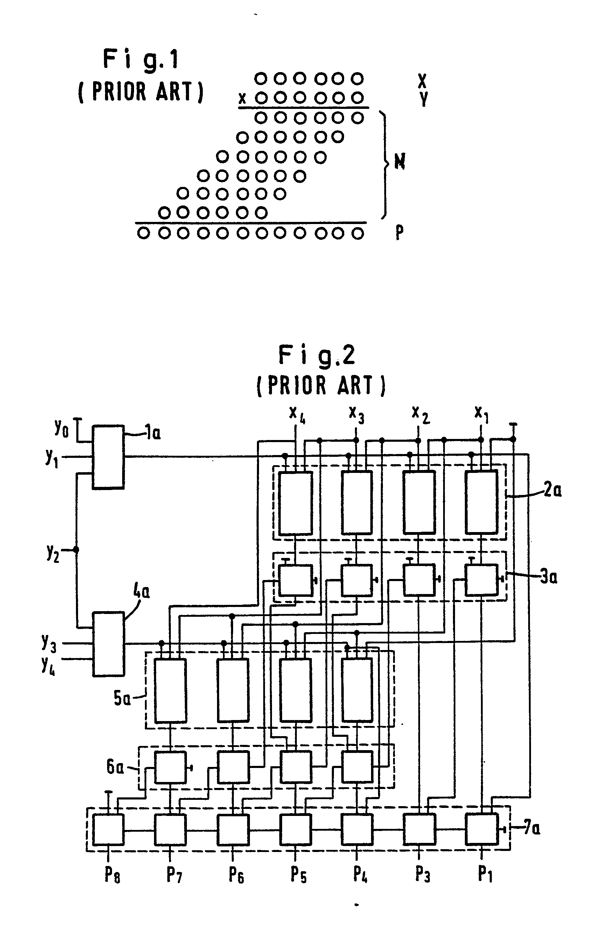

The heretofore well known multiplication algorithm is such that partial products of a multiplicand X by respective bits of a multiplier Y are produced respectively and then they are all added together as shown in Fig. 1. It is clear that for a multiplier of N bit, N partial products would be produced. In order to obtain a resultant product P, N times of addition were necessitated, and hence this algorithm was not suitable for a multiplier circuit which was required to have an increased operation speed. Therefore, various multiplication algorithms have been investigated, and among them, for instance, the 2-bit Booth's algorithm has been proved to be especially suitable for formation of a multiplier circuit in an LSI technical field. It is known that the 2-bit Booth's algorithm means an algorithm in which two numbers represented in the form of complements on two are multiplied by each other. Now this algorithm will be explained assuming that a multiplicand is X and a multiplier is Y. The multiplicand X is represented in the form of a complement on two, as follows:

$$X = -x_n \cdot 2^{n-1} + \sum_{i=1}^{n-1} x_i \cdot 2^{i-1} \tag{1}$$

where $x_n$ is '0' when the multiplicand X is a positive number while it is '1' when the multiplicand X is a negative number, and in the case of a negative number, $x_i$ represents the respective bits obtained by inverting the respective bits in the binary code representing the original number and adding one to the least significant bit. The multiplier Y is also represented in a similar manner, as follows:

$$Y = -y_n \cdot 2^{n-1} + \sum_{i=1}^{n-1} y_i \cdot 2^{i-1} \tag{2}$$

Here, paying attention to the multiplier Y. Equation (2) can be modified as follows:

$$Y = -y_n \cdot 2^{n-1} + y_{n-1} \cdot 2^{n-2} + y_{n-2} \cdot 2^{n-3} + \ldots$$

$$\ldots + y_4 \cdot 2^3 + y_3 \cdot 2^2 + y_2 \cdot 2 + y_1 \cdot 2^0$$

$$= -y_n \cdot 2^{n-1} + y_{n-1} \cdot 2^{n-2} + (2y_{n-2} - y_{n-2}) \cdot 2^{n-3} + \ldots$$

$$= -y_n \cdot 2^{n-1} + y_{n-1} \cdot 2^{n-2} + 2y_{n-2} \cdot 2^{n-3}$$

$$- y_{n-2} \cdot 2^{n-3} + \ldots$$

$$= (-2y_n + y_{n-1} + y_{n-2})2^{n-2} + (-2y_{n-2} + y_{n-3} + y_{n-4}) \cdot 2^{n-2} + \ldots$$

$$\ldots + (-2y_n + y_3 + y_2) \cdot 2^2 + (2y_2 + y_1 + y_0) \cdot 2^0$$

$$= \sum_{i=0}^{\frac{n}{2}-1} (-2y_{2i+2} + y_{2i+1} + y_{2i}) \cdot 2^{2i} \tag{3}$$

Here, for simplicity it is assumed that $y_0 = 0$ and $n$ is an even number. From Equation (3), the product of X and Y is represented as follows:

$$P = XY + \sum_{i=0}^{\frac{n}{2}-1} (-2y_{2i+2} + y_{2i+1} + y_{2i})X \cdot 2^{2i} \tag{4}$$

where each term on the right side $(-2y_{2i+2} + y_{2i+1} + y_{2i})X \cdot 2^{2i}$ forms the partial product. As will be obvious from the above equation, n/2 partial products are obtained, in which $2^{2i}$ represents the weight of each bit. Since the coefficient $(-2y_{2i+2} + y_{2i+1} + y_{2i})$ for X takes any one value among 0, ±1 and ±2 depending upon the values of three consecutive bits, as indicated in the truth table of Table 1 the partial product takes any one value among 0, ±X and ±2X. In this instance, since 2X means a double of the multilicand, it can be produced by merely shifting X leftwards by one bit. On the other hand, a negative number can be produced by producing a complement on one of X, that is, $\overline{X}$ and adding one to its least significant bit. As described above, according to the Booth's algorithm a partial product can be produced in the form containing a sign bit without specially dealing with a sign bit in the form of a complement on two, and therefore, there is provided an advantage with respect to hardwares that a correction circuit for sign operation is not necessitated.

TABLE 1

| $Y_{i+2}$ | $Y_{i+1}$ | $y_i$ | Operation |
|-----------|-----------|-------|-----------|
| 0 | 0 | 0 | 0 |
| 0 | 0 | 1 | +X |
| 0 | 1 | 0 | +X |
| 0 | 1 | 1 | +2X |
| 1 | 0 | 0 | −2X |
| 1 | 0 | 1 | −X |
| 1 | 1 | 0 | −X |
| 1 | 1 | 1 | 0 |

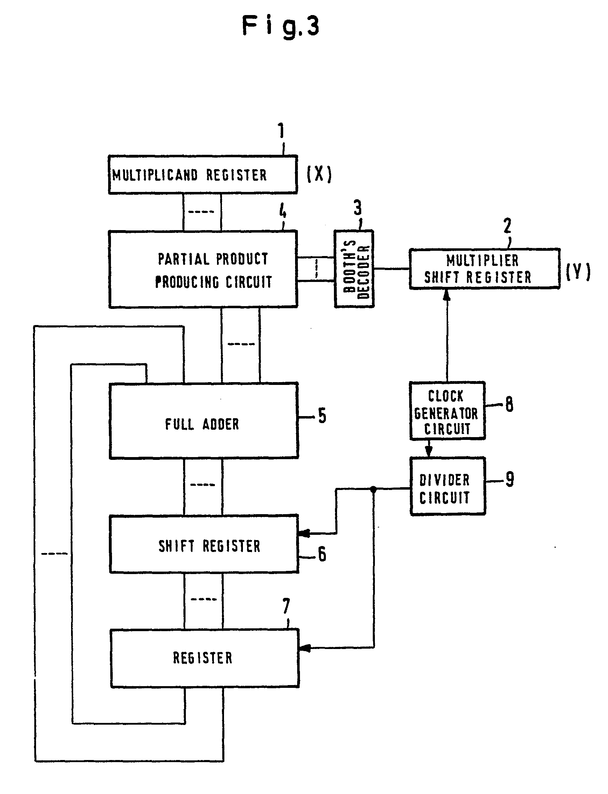

One construction of a heretofore known parallel multiplier circuit for executing the Booth's algorithm is illustrated in Fig. 2. This figure shows the case where two 4-digit numbers are multiplied, and $x_1\,x_2\,x_3\,x_4$ represents a multiplicand, while $y_1\,y_2\,y_3\,y_4$ represents a multiplier. Reference numeral 1a designates a Booth's decoder in which it is determined for the values of three consective bits $y_0(=0)$, $y_1$ and $y_2$ which one of 0, ±1 and ±2 is the coefficient for producing a partial product. Depending upon the output of this decoder 1a, a partial product is produced by a partial product producing circuit 2a. Addition of the output of this circuit 2a to a partial sum of partial products (in this instance, its initial value of 0) is executed by a full adder 3a. A similar operation is executed for three consecutive bits $y_2$, $y_3$ and $y_4$ in the other Booth's decoder, and the corresponding partial product is produced by a partial product producing circuit 5a. The less significant two bits of the partial product is added to the more significant two bits of the output from the preceding full adder 3a by another full adder 6a. As a matter of course, a carry is also output, if exists. Eventually, additions for the respective corresponding bits are executed by a full adder 7a, and thereby a product ($P_1\,P_2\,P_3...P_7$) is obtained. An additional bit $P_8$ is a sign bit for the product.

However, it is to be noted that although a small number of full adders would suffice in the case where the numxer of digits is small as in the above-described example, if the number of digits is increased, then the number of full adders is increased depending upon the number of digits in a multiplier and the number of digits is a multiplicand. For instance, in a multiplier circuit for a N-digit multiplier and a M-digit multiplicand (for simplicity, M is assumed to be an even number), N/2 full adders are necessitated. However, except for the case where a multiplication operation at an extremely high speed is necessitated, in the case of processing signals at a relatively low frequency that is as low as, for example, a speech there is no need to execute high-speed multiplication, and so, it is rather desired to reduce a number of hardware elements. Moreover, in the case of the construction in which a full adder and a partial product producing circuit are cascaded in a plurality of stages as shown in Fig. 2, unless the respective stages are controlled in their input and output timings, erroneous operations would occur. This timing control, however, will become more difficult as the number of the cascaded stages is increased. More particularly, a plurality of timing signals having different phases, clock signals having different frequencies and the like are necessitated. Furthermore, a number of Booth's decoders 1a and 4a is also increased, and so, the hardware elements are more and more complexed.

A block diagram of a digital processing circuit with multiplier function in which the above-mentioned shortcomings in hardware and timing control are eliminated, is illustrated in Fig. 3. In this circuit, there are provided only one full adder 5 and one partial product producing circuit 4 which are operated under the Booth's algorithm. It is intended to obtain a product by repeating an operation of adding a partial product produced by the partial product producing circuit 4 to a total sum of the previously obtained partial products by the full adder 5. A multiplicand is set in a register 1 and a multiplier is set in a shift register 2. The multiplier which is set in the shift register 2 with the least significant digit located at the left end bit portion, is shifted bit by bit as synchronized with a clock issued from a clock generator circuit 8 (in particular, this could be a clock generator used within a speech processing system), and at first the least significant three bits are input to a Booth's decoder 3. The output of the decoder 3 obtained by decoding the input three bits according to Table 1 above is input to the partial product producing circuit 4 jointly with the multiplicand. A partial product produced by the partial product producing circuit 4 is input to the full adder 5 coupled to output of a register 7 which holds a sum (partial sum) of the previously obtained partial products, and a new partial sum is produced in this full adder 5 and is input to a shift register 6. This shift register 6 is inserted for the purpose of transferring the output of the full adder 5 to the register 7 which holds the partial sum at a predetermined timing in response to a clock applied from a clock frequency-divider circuit 9. A clock for driving the register 7 is also applied from the same clock frequency-divider circuit 9 and hence it is synchronized with the clock applied to the shift register 6. The Booth's decoder 3 executes a decode processing for three consecutive bits in the multiplier, and transfers the decoded output to the partial product producing circuit 4. This circuit 4 carries out multiplication of the multiplicand by a decoded output to produce a partial product each time when a decoded output is transferred. These operation timings can be easily controlled so as to synchronize with another circuit by means of the same clock generator. Further, all the partial products necessitated in multiplication are produced by the single partial product producing circuit 4. On the other hand, the full adder 5, shift register 6 and register 7 are coupled in a loop, and hence, addition (production of a partial sum) is effected once within each partial product producing cycle. According, production of a partial sum is effected simultaneously with production of a partial product, and after these operations have been repeated, a resultant product can be obtained at the moment when the last addition of the last partial product to the partial sum has been completed.

As described above, in embodiment, the number of partial product producing circuits and addition processing circuits, respectively, could be only one for executing the Booth's algorithm. Moreover, since it is only required to control the timing of production of a partial product and the timing of addition processing, timing control is extremely simple. Furthermore, since the timing control can be achieved with only two kinds of clocks, the multiplier circuit according to the above-described embodiment is especially advantageous to be manufactured in an LSI circuit in view of its design and manufacture. In addition, since a shift register 6 for temporarily holding a newly produced partial product and shifting it in parallel, is provided between the full adder 5 and the register 7 and is controlled by a timing signal (clock) for the shift register 7, data can be maintained within the partial sum transfer loop without being confused. Still further, * as the shift timing for the multiplier and the input/output timing for the shift register 7 are controlled by clocks in the same system, there exists a big merit that matching between the operation of this multiplier circuit with that of another information processing circuit (for example, a speech synthesizer circuit) can be easily realized.

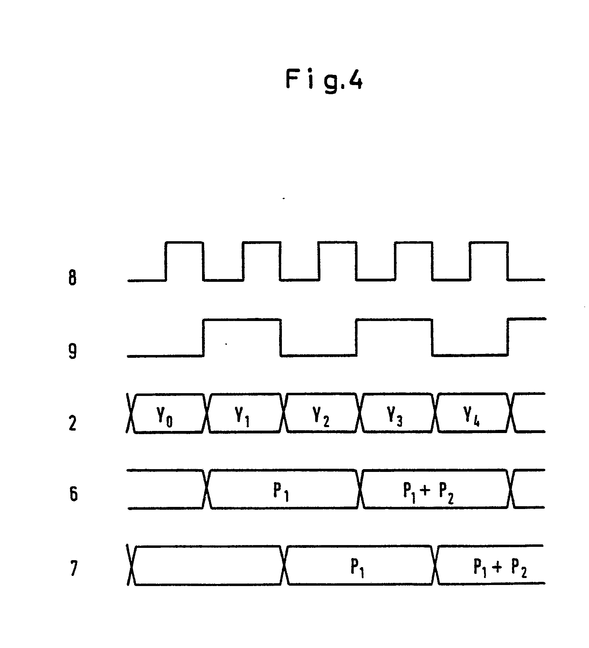

Now let us consider the rate of shifting a multiplier bit by bit to produce one partial product and the rate of circulating a partial sum of partial products to the loop of $5 \to 6 \to 7 \to 5$ with reference to Fig. 3, in connection to the case of the 2-bit Booth's algorithm. As shown in Fig. 4, the rate of shifting the multiplier must be twice as large as the transfer rate in the addition and circulation process. This is because the Booth's decoder 3 carries out a decode processing for each unit consisting of three bits and one of the these three bits (that is, the most significant bit) is again used in the next subsequent decode processing as the least significant bit. That is, the bit is stored within the Booth's decoder 3 during two consecutive decode processings. Therefore, new bits to be input to the Booth's decoder 3 for each decode processing would be two bits. These bits can be set in the Booth's decoder 3 within two clock cycles. Accordingly, these two clock cycles corresponding to one addition and transfer cycle. To that end, the clock frequency-divider 9 divides the frequency of the clock generated by the clock generator circuit 8 into 1/2. In other words, the frequency-divider circuit 9 is necessary for the purpose of synchronizing the timing for production of partial products with the timing for addition. If it is assumed that the Booth's algorithm of more than 2 bits is employed, then the ratio of frequency division must be increased further. On the other hand, considering on the basis of the technical concept the number of hardware elements in the multiplier circuit should be minimized, provision of two clock systems is not favorable in view of a circuit area, and it is desired to further reduce the number of hardware elements.

In the following a multiplier circuit according to a preferred embodiment of the present invention in which the circuit construction is improved from the aforementioned view point, will be described. It is to be noted that in the Booth's decoder 3, for each decode processing the data held therein are shifted by 2 bits in the case of the 2-bit Booth's algorithm, while in the case of the higher order Booth's algorithm such as $n$-bit Booth's algorithm the data will be shifted by the corresponding number of bits, that is, by $n$ bits. Accordingly, in this embodiment, contrivance is made such that the multiplier shift register may be used in a parallel form depending upon the order of the Booth's algorithm.

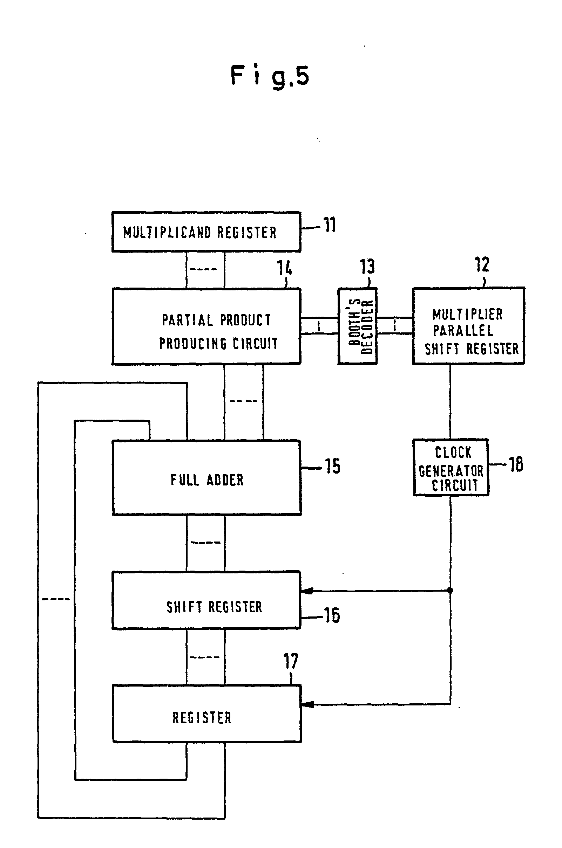

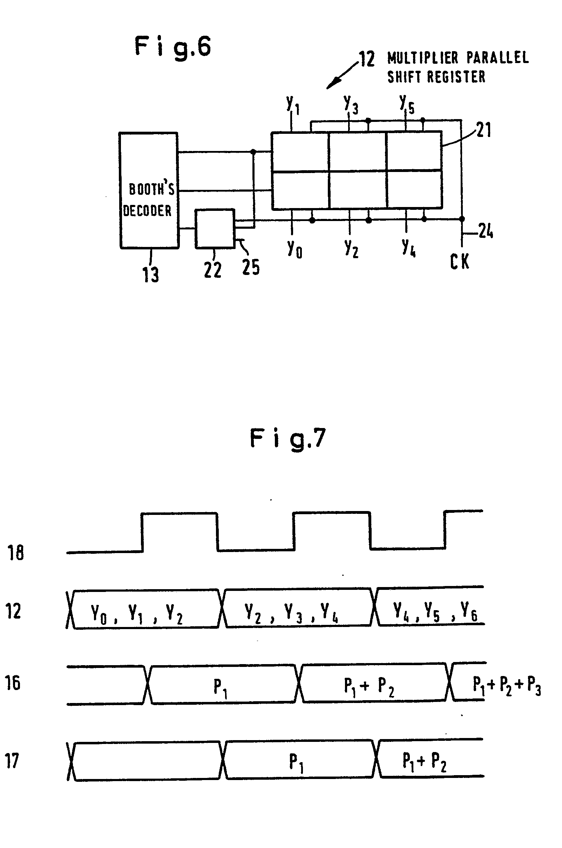

Now the improved embodiment will be explained with reference to Fig. 5 in which the second order Booth's algorithm is employed. Here, blocks designated by reference numerals 11 and 13 to 17 in this figure correspond to the blocks designated by reference numerals 1 and 3 to 7 in Fig. 3, and the corresponding blocks have the same function. Assuming now that a multiplier is $y_5, y_4, y_3, y_2, y_1, y_0$ then according to the second order Booth's algorithm, the multiplier must be applied to a Booth's decoder 13 sequentially in a plurality of sets each consisting of $y_1, y_0, y_{-1}$ (it is assumed that $y_{-1}=0$ is fulfilled), $y_3, y_2, y_1$ and $y_5, y_4, y_3$, respectively. A more detailed circuit diagram of this multiplier shift register (hereinafter called "multiplier parallel shift register") 12 is illustrated in Fig. 6. In this multiplier parallel shift register 12, a multiplier is shifted by 2 bits in response to each clock 24 applied from a clock generator 18. To that end, the bits in the

5

multiplier are divided into two groups (in the illustrated example, into a group of bits in the odd number orders and a group of bits in the even number orders) and are set in the respective stages of a parallel 2-stage shift register 21, respectively. In addition, another shift register 22 is provided for holding and reusing a bit in the just preceding odd number order. As a result, an output of three bits can be applied simultaneously to a Booth's decoder 13 in response to one clock. Reference numeral 25 designates a reset signal for the shift register 22. Consequently, in response to application of one clock to the multiplier parallel shift register 12, the necessary three bits can be applied simultaneously to the Booth's decoder 13. The output of the Booth's decoder is input to a partial product producing circuit 14 coupled to an output of a multiplicand register 11, and a partial product is produced in this circuit 14. The produced partial product is subjected to operation jointly with a partial sum of the previously produced partial products (set in a register 17), in a one-stage parallel full adder 15 so as to produce a new partial sum, and the new partial sum is input to a register 17 for holding an up-to-date partial sum via a shift register 16 serving as a timing buffer gate. Then, owing to the fact that the shift register in which a multiplier is set is constructed as shown in Figs. 5 and 6, the multiplier circuit operates in the timing shown in Fig. 7. As will be obvious from these figures, according to this improved embodiment it is possible to equalize the rate of shifting data in the multiplier parallel shift register 12 to the transfer rate in the process for renewing a partial sum by adding a newly produced partial product to the previous partial sum ($14\rightarrow15\rightarrow16\rightarrow17$). Accordingly, it becomes possible to drive the entire multiplier circuit by making use of only one single kind of clock issued from a clock generator circuit 18, and so, the hardwares used in the frequency-divider circuit 9 in Fig. 3 can be spared. In other words, since the time required for addition and transfer ($14\rightarrow15\rightarrow16\rightarrow17$) and the time required for setting three bits in the Booth's decoder 13 can be equalized to each other, it becomes possible to perfectly achieve timing control by making use of only one clock generator circuit 18. As described above, the number of hardware elements can be reduced by merely modifying the construction of the shift register in which a multiplier is set, and therefore, the above-described embodiment has a great merit in view of a circuit construction. In this embodiment also, as a matter of course, the effects and advantages described previously in connection with the circuit shown in Fig. 3 are still retained.

It is to be noted that while a construction of a multiplier parallel shift register in the case of the second order Booth's algorithm has been illustrated in Fig. 6, in the case of the higher order Booth's algorithm than the second order, obviously it will suffice to modify the register into a parallel form depending upon the order number. In addition, if provision is made such that the timing for setting of the partial sum input from the register 17 to the full adder 15 may be controlled by a control signal, then the shift register 16 could be omitted. Furthermore, modification could be made such that read and/or write operations for the shift register 16 and the register 17 may be controlled by two-phase clock signals $\phi_1$ and $\phi_2$ which are generated by shifting the phase of the clock output from the clock generator 18.

While the present invention is effective when it is embodied in a multiplier circuit for carrying out a digital signal processing, especially it will provide an extremely remarkable advantage if it is applied to a digital filter for dealing with a relatively low frequency signal in a speech synthesizer system.

Speech synthesis is a technique for simulating voicing organs of a human being with hardwares, and among the speech synthesizer systems, a linear predictive coding (LPC) system, a partial autocorrelation coefficients (PARCOR) system, a formant system, a second segment assembler system, etc. have been known.

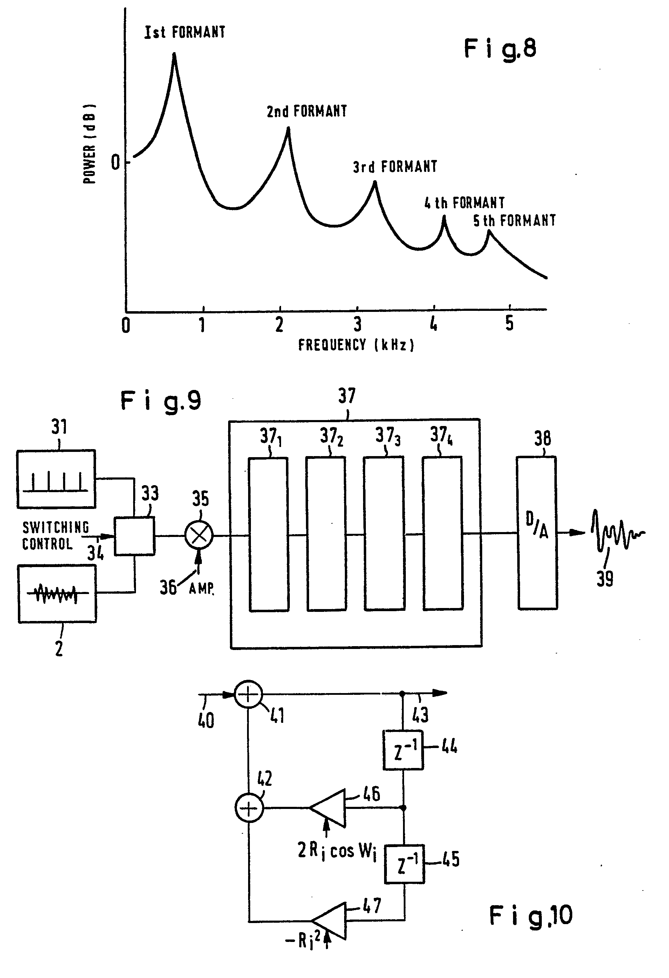

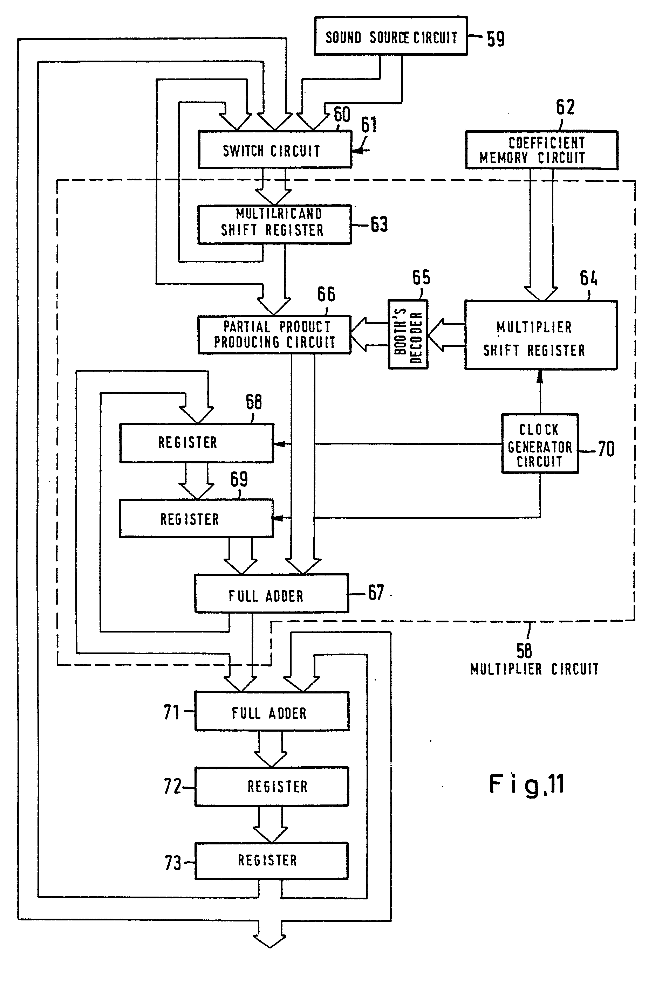

Here, by way of example, consideration will be made on speech analysis according to the formant system. If a spectrum of a speech is observed, a frequency characteristic as shown in Fig. 8 will be represented. A number of resonance curves are overlapped with each other, and the observed resonant points are called in sequence from the lowest frequency resonant point "first formant", "second formant", . . . . Among these formants, the first to fifth formants are shown in Fig. 8. In the speech synthesis according to the formant system, after a signal issued from a sound source has been multiplied by amplitude information representing a loudness of speech, the multiplied signal is given a resonance characteristic possessed by a human vocal tract, and thereby a synthesized speech is generated. With regard to a model of the sound source, as shown in Fig. 9 a periodic impulse signal is employed for a voiced sound, while a pseudo-random signal is employed for an unvoiced sound, and digital filters are used to give a desired resonance characteristic. In Fig. 9, reference numeral 31 designates an impulse signal generator circuit, and reference numeral 32 designates a random signal (white noise signal) generator circuit. In response to a switching control signal 34, either one of these signals is selected by a sound source switching circuit 33, and it is multiplied by amplitude data 36 in a multiplier circuit 35. The output of the multiplier circuit 35 is given a resonance characteristic through a digital filter 37. This multiplier circuit 35 is used in common in each stage ($37_1\sim37_4$) of the filter 37. Then, the output of the filter 37 is converted into an analog signal by a D/A converter 38. This analog signal is output as a synthesized speech 39. The resonance characteristic of a formant can be attained by applying the data of the frequency and the bandwidth of the formant to the digital filter. The digit filter used in this speech synthesizer is a second order cyclic type digital filter as shown in Fig. 10. To the first stage filter is input a signal obtained by multiplying the signal issued from the sound source by the data representing a loudness of a speech, and to a digital filter in a subsequent stage is input a signal from the filter in the just preceding stage. Coefficients $2R_i \cos W_i$ and $-R_i^2$ derived from formant frequency information ($R_i$) and formant bandwith information ($W_i$) are multiplied by multiplier circuits 46 and 47, respectively. Through these operations the

6

respective formants can be produced, then they are superposed on each other by being added together with full adders 42 and 41. As will be seen from Fig. 10, a multiplicand in the multiplier circuit is a signal obtained by multiplying the signal issued from the sound source by the amplitude information or an output signal from a digital filter in the preceding stage, and a multiplier is the formant frequency information or the formant bandwidth information. Here it is to be noted that since the frequency of a speech signal is low, the circuit used for speech analysis is designed so as to operate at a relatively low rate. Accordingly, the multiplier circuit must be constructed so as to match with such circuit design.

In the following, one preferred embodiment of the digital processing circuit having multiplier function to be used in a speech synthesizer system will be explained with reference to Fig. 11.

Fig. 11 shows one example of a circuit for realizing the speech synthesizer system in Fig. 9, and in this circuit the portion encircled by a dash line frame 58 is a multiplier circuit according to the present invention. Here, it is assumed that a data length of a sound source includes 12 bits, amplitude information and coefficients consist of 8 bits and formants to be synthesized are the first to fourth formants. A sound source circuit 59 includes the periodic impulse train generator circuit 31, the pseudo-random signal generator circuit 32, the sound source switching circuit 33 and the sound source switching control signal 34 shown in Fig. 9. An output of the sound source circuit 59 is input through a switching circuit 60 to a multiplicand shift register 63 which forms a part of the multiplier circuit 58. An output of the multiplicand shift register 63 is input to a partial product producing circuit 66, and also it is again set in the multiplicand shift register 63 through the switching circuit 60. Through this operation, the role of a delay circuit 45 in Fig. 10 can be achieved, hence the output of the multiplicand shift register 63 at the present time point which corresponds to an output of a delay circuit 44 can be held again, and so, delay of one bit can be achieved. On the other hand, amplitude information of each digital filter stage ($37_1 \sim 37_4$) as well as the coefficients (2R cos W and $-R^2$) of the digital filter in Fig. 10 are stored in a coefficients memory circuit 62, and they are read to a multiplier shift register 64. The amplitude information of coefficients input to the multiplier shift register 64 are shifted by a shift clock issued from a clock generator 70, and they are input to a Booth's decoder 65 each time two bits in parallel. A decode output from the Booth's decoder 65 is input to the partial product producing circuit 66, in which a partial product of the output of the multiplicand shift register 63 by the decode output is produced. The produced partial product is input to a full adder 67, in which the partial product is added to the partial sum (0 in the initial condition) of the previously obtained partial products which is given as an output of a register 69. The result of addition is set in a register 68. The timing for these operations is controlled by a clock issued from the clock generator 70. Furthermore, in response to a clock issued from the clock generator 70, an output of the register 68 is held in the register 69. The output of the register 69 is added by the full adder 67. After the multiplication has been completed, addition is carried out in a full adder 71 in the next stage. Assuming now that the output of the delay circuit 44 in Fig. 10 is A and the output of the delay circuit 45 is B, the result of multiplication B · $(-R^2)$ effected in the multiplier circuit 58 is transferred via the full adder 71 and a register 72 to a register 73, where it is temporarily held for timing control. Thereafter, it is added with the next output A · 2R cos W of the multiplier circuit 58 in the full adder 71, and it is likewise held in the register 72 and then transferred to the register 73. In this way, an output of one stage of digital filter shown in Fig. 10 is set in the register 73. In the speech synthesis of the formant system, digital filters as shown in Fig. 10 are connected in series as many as the number of formants to be simulated and an output of each digital filter serves as an input to a digital filter in the next stage, so that the output of the register 73 is input to the multiplicand shift register 63 via the switching circuit 60. This switching circuit 60 switches among the output of the sound source circuit 59, the output of the multiplicand shift register 63 and the output of the register 73 in response to a switching control signal 61. The speech synthesis is executed in the above-described manner. In this operation, the multiplier circuit 58 carries out the multiplication of the sound source signal by the amplitude information and the multiplication of the data obtained by delaying the input to the digital filter by the coefficient of the digital filter.

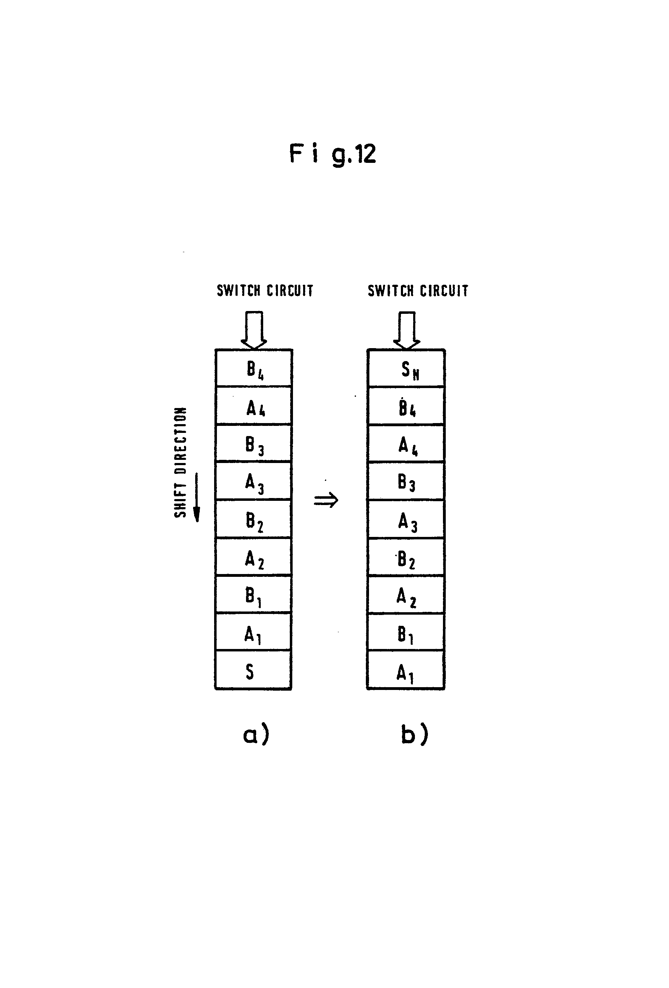

For convenience of explanation of the construction of the multiplicand shift register 63, the outputs of the delay circuits 44 and 45 in the digital filter shown in Fig. 10 are denoted by $A_i$ and $B_i$, respectively, and the outputs $A_i$ and $B_i$ of the digital filters for the first to fourth formants are represented by $A_1$, $B_1$, $A_2$, $B_2$; $A_3$, $B_3$ and $A_4$, $B_4$. Also, a sound source signal is represented by S and amplitude information is represented by AMP. Then, as shown in Fig. 9 the input to the digital filter corresponding to the first formant is S×AMP. The output $A_1$ is derived by adding the outputs of the delay circuits 44 and 45, respectively, to the input S×AMP and delaying the sum by one clock cycle. The output $B_1$ is derived by further delaying the output $A_1$ by one clock cycle. The coefficients of the digital filters corresponding to the respective formants are represented generally by $2R_i \cos W_i$ and $-R_i^2$, then the respective coefficients will be $2R_1 \cos W_1$, $-R_1^2$; $2R_2 \cos W_2$, $-R_2^2$, . . . ; $2R_4 \cos W_4$, $-R_4^2$. Hence, the sum of $A_1 \times 2R_1 \cos W_1$ and $B_1 \times (-R_1^2)$ becomes an input to the digital filter corresponding to the second formant, and the input $A_2$ is derived by delaying this input by one clock cycle. Through the same process all the inputs up to $A_4$, $B_4$ can be derived. In order to carry out such operations, the multiplicand shift register 63 is constructed of a 9-stage shift register, in which data are disposed as shown in Fig. 12(a). In response to a shift clock, these data are shifted by one bit, and as shown in Fig. 12(b), when the data S is output from the shift register 63, new data $S_N$ is set in the same shift register via the switching circuit 60. Subsequently, each time the data are sequentially shifted, new data $A_1$, $B_1$; $A_2$, $B_2$; . . . ; $A_4$, $B_4$ are successively set in the multiplicand shift register 63 via the switching circuit 60.

Since the respective bit lengths of the amplitude information, $2R_i \cos W_i$ and $-R_i^2$ are 8 bits, the data in the multiplier shift register 64 are 8-bit data Y, which are represented in the form of a complement on two by $y_7y_6y_5y_4y_3y_2y_1y_0$. In the second order Booth's algorithm, it is desirable to shift the multiplier in parallel each time by two bits because the multiplier is processed as divided into 3-bit groups $y_7y_6y_5$, $y_5y_4y_3$, $y_3y_2y_1$ and $y_1y_0y_1$ $(y_{-1}=0)$. A flow of data in the partial product producing circuit 66 and the subsequent circuits (full adder 67→register 68→register 69) is such that a partial product based on, for example, $y_3y_2y_1$ is produced and this is added to a partial product based on $y_1y_0y_{-1}$ held in the register 69 by the full adder 67. The result of addition is held in the register 68, and control is effected such that when the 3-bit group changes from $y_3y_2y_1$ to $y_5y_4y_3$ the value in the register 68 may be shifted to the register 69. Accordingly, in such a flow of data, in order to equalize the clock for driving the registers 68 and 69 and the clock for driving the multiplier shift register 64, it is only required to shift the even number bits and the odd number bits at the same time. As a result, complexing of a clock generator circuit can be presented and a number of hardware elements can be reduced.

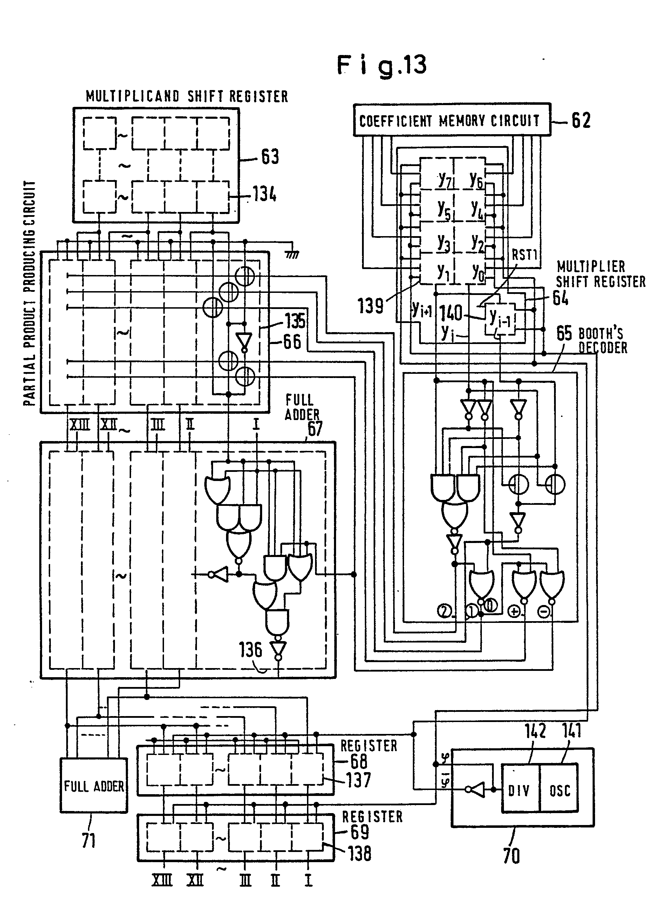

In Fig. 13 is shown one example of detailed constructions of the multiplier shift register 64. Booth's decoder 65, partial product producing circuit 66, full adder 67, register 68, register 69 and clock generator 70. Although a product of 12-digit number×8 digit number becomes a 20-digit number, the circuit in Fig. 13 is constructed such that 12 digits can be read out at the maximum as significant digits. In this figure, amplitude information or a coefficient read out of a coefficient memory circuit 62 is input to a multiplier shift register 64 as divided into an odd number group $(y_1, y_3, y_5, y_7)$ and an even number group $(y_0, y_2, y_4, y_6)$. In this multiplier shift register 64, four 1-bit shift registers 139 are arrayed in series respectively on the odd number side and on the even number side, and in response to a clock issued from a clock generator 70 the data in this shift register 64 are shifted. The output from the shift register 64 is input to a Booth's decoder 65 each time 3 bits. In the Booth's decoder 65, an odd number bit datum serves in itself as a decoder input, and at the same time it is delayed by one bit cycle by a delaying shift register 140. When the bits $y_0$ and $y_1$, have been input to the Booth's decoder 65, it is reset by a reset signal $RST_1$. In the block of the Booth's decoder 65 in Fig. 13 is shown one example of the detailed circuit, in which the logic follows the logic value table in Table 1, and signals representing a coefficient (2, 1, 0) and a sign $(+, -)$ are applied from the Booth's decoder 65 to a partial product producing circuit 66. Representing an output from a multiplicand shift register 63 by X, in the partial product producing circuit 66 is carried out an operation for producing a partial product of $\pm2X$, $\pm X$ or 0. Reference numeral 135 denotes one example of a detailed circuit for one-bit in the partial product producing circuit 66. Upon operation of 2X, X is shifted by one bit to the more significant positions and 0 is input to the least significant position. Upon operation of $-X$, X is inverted to X, and 1 is added to the least significant bit in a full adder 67 because the operation is based on a complement on two. Reference numeral 41 designates a latch for holding the 1 to be added to the least significant bit, and it latches data in response to a clock issued from a clock generator 70. Upon operation of 0, 0 is output in response to the signal 0, and upon operation of X, X is in itself output in response to the signal 1. Upon operation of $-2X$, the operation of 2X and the operation of $-X$ could be effected in combination. In other words, after X has been shifted by one bit to the more significant positions, every bit is inverted and 1 is added to the least significant bit in the full adder 67. Although the data length in the multiplicand shift register 63 is 12 bits, when the operation of 2X is carried out the data are shifted by one bit to the more significant positions, and therefore, the partial product producing circuit 66 has a 13-bit construction. This is effective for preventing the significant digits from being reduced by one digit. Likewise, the full adder 67 also has a 13-bit construction. Reference numeral 136 designates one example of a detailed circuit for one bit in the full adder 67. To the input portions I, II, III, . . . XII and XIII of the full adder 67 is applied the output of the register 69. The output of the full adder 67 is latched in a register 68 as shifted by 2 bits to the less significant positions. This is an operation for aligning digits to process the multiplier each time 2 bits. To the most significant position and the next less significant position of the register 68 is input the most significant bit in the full adder 67. The registers 68 and 69 are driven by clocks φ and $\overline{φ}$ (these having different phases) issued from the clock generator 70. Reference numerals 137 and 138 designate blocks for one bit of the registers 68 and 69, respectively, and they could be, for example, flip-flops. The register 68 is reset by a reset signal $RST_2$ at an appropriate timing. Since the output transferred from the full adder 67 to a full adder 71 in the next stage has its digit number to 12 digits, only the most significant 12 digits are output to the full adder. By way of example, the clock generator 70 is constructed by a crystal oscillator 141, a frequency divider 142 for dividing the frequency of the oscillator output to produce a clock and an inverter. In the multiplier circuit having a circuit construction as shown in Fig. 13, only one kind of drive clock suffices. If the multiplier shift register 64 is a common shift register in which data are shifted simply bit by bit in the manner of $y_0 \leftarrow y_1 \leftarrow \ldots \leftarrow y_7$, the clock for driving the multiplier shift register 64 must have a clock frequency $(2φ)$ which is twice as large as the frequency of the output $(φ)$ from the clock generator 70. However, by forming the multiplier shift register 64 in parallel arrays, only one kind of clock is made sufficient. Accordingly, in view of formation of an LSI circuit, there is a big merit that wirings and design of a clock generator becomes simple and also a number of hardware elements is reduced.

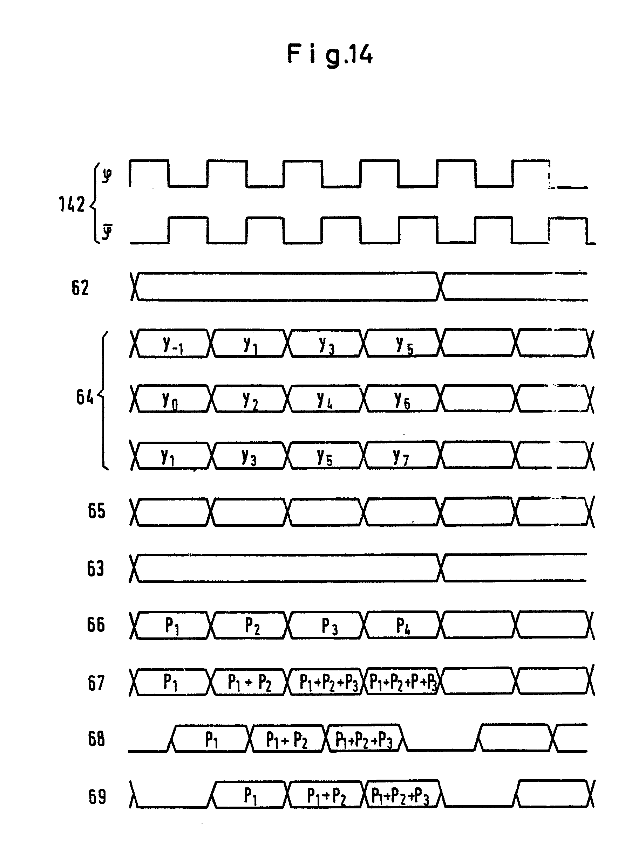

Now the operation of the multiplier circuit in Fig. 13 will be explained with reference to a timing chart in Fig. 14. Waveforms φ and $\overline{φ}$ represent the output clocks issued from the clock generator 70. The multiplier data are shifted in the multiplier shift register 64 in response to the output signals and from the clock generator 70 in the manner of $y_1 y_0 y_{-1} \rightarrow y_3y_2y_1 \rightarrow y_5y_4y_3 \rightarrow y_7y_6y_5$. According to the variation of the output of the multiplier shift register 64, the output of the Booth's decoder 65 is also varied. The data in the multiplicand shift register 63 are shifted at the same timing as the reading out of the coefficient memory circuit 62. Representing the partial products produced on the basis of $y_1y_0y_{-1}$, $y_3y_2y_1$, $y_5y_4y_3$ and $y_7y_6y_5$ by $P_1$, $P_2$, $P_3$ and $P_4$, respectively, these partial products are successively produced by the partial product producing circuit 66 in synchronism with the output signal $\varphi$ from the clock generator 70. The full adder 67 accumulates these partial products at the same timing in the manner of $P_1{\rightarrow}P_1{+}P_2{\rightarrow}P_1{+}P_2{+}P_3{\rightarrow}P_1{+}P_2{+}P_3{+}P_4$ to calculate partial sums as well as a total sum. The register 68 for holding the output of the full adder 67 changes its contents in response to the output signal $\overline{\varphi}$ from the clock generator 70. After the register 68 has transferred $P_1{+}P_2{+}P_3$ to the register 69, it is reset by the reset signal $RST_2$. The output of the register 68 is held in the register 69 as synchronized with the output signal from the clock generator 70. In this way, the register 69 holds an accumulated sum up to the partial product just prior to the partial product to be newly produced in the partial product producing circuit 66, and outputs this partial sum to the full adder 67. Here it is to be noted that as will be apparent from Figs. 13 and 14, the decode processing, partial product producing processing and accumulation processing are all executed in the same period, and moreover, for the processing period only one clock cycle is sufficient.

## Claims

1. A digital processing circuit comprising:
first means (63) for storing a multiplicand therein;
second means (62) for storing a multipier therein;
third means (65) for decoding the multiplier read out of said second means according to the Booth's algorithm to thereby produce coefficients;
fourth means (66) coupled to said third means and said first means for producing partial products by multiplying the multiplicand by said coefficients;
fifth means (67) having first and second input sections for executing addition of first and second inputs received at said first input section and said second input section respectively, said first input section being coupled to said fourth means and receiving said partial products as said first input;
sixth means (69) for receiving a result of addition from said fifth means and feeding back this result to said second input section of said fifth means as said second input of said fifth means; and
seventh means (68) coupled to said fifth means or said sixth means for outputting a result of multiplication, characterized by further comprising an eighth means (64) coupled between said second means (62) and said third means (65) for receiving the multiplier from said second means (62) and simultaneously sending a plurality of consecutive bits of the received multiplier in parallel to said third means (65), said eighth means (64) including a circuit ($Y_{i-1}$) having a function of temporarily storing one bit within said consecutive bits which have been previously sent to said third means (65) and sending the stored bit to said third means (65) together with a plurality of bits to be sent to said third means (65) at a next timing.

2. A digital processing circuit as claimed in claim 1, characterized by further comprising a clock generator (70) producing a timing clock signal for simultaneously controlling both the operation of said eighth means (64) and the operation of said sixth means (69).

## Revendications

1. Circuit de traitement numérique comprenant:

— un premier moyen (63) pour stocker un multiplicande;
— un second moyen (62) pour stocker un multiplicateur;
— un troisième moyen (65) pour décoder le multiplicateur sorti du second moyen selon l'algorithme de Booth pour produire ainsi des coefficients;
— un quatrième moyen (66) couplé au troisième moyen et au premier moyen pour produire des produits partiels en multipliant le multiplicande par lesdits coefficients;
— un cinquième moyen (67) comportant des première et seconde sections d'entrée pour exécuter l'addition de première et seconde entrées reçues à la première section d'entrée et à la seconde section d'entrée, respectivement, la première section d'entrée étant couplée au quatrième moyen et recevant les produits partiels comme première entrée;
— un sixième moyen (69) pour recevoir un résultat de l'addition du cinquième moyen et renvoyant ce résultat à la seconde section d'entrée du cinquième moyen comme seconde entrée de ce cinquième moyen; et
— un septième moyen (68) couplé au cinquième moyen ou au sixième moyen pour sortir un résultat de multiplication;

caractérisé en ce qu'il comprend en outre un huitième moyne (64) couplé entre le second moyen (62) et le troisième moyen (65) pour recevoir le multiplicateur en provenance du second moyen (62) et envoyer simultanément une pluralité de bits consécutifs du multiplicateur reçu en parallèle au troisième moyen

9

(65), ce huitième moyen (64) comprenant un circuit ($Y_{i-1}$) ayant une fonction de stockage temporaire d'un bit à l'intérieur des bits consécutifs qui ont été précédemment envoyés au troisième moyen (65) et envoyant le bit stocké au troisième moyen (65) en même temps qu'une pluralité de bits devant être envoyés au troisième moyen (65) à un instant suivant.

2. Circuit de traitement numérique selon la revendication 1, caractérisé en ce qu'il comprend en outre un générateur d'horloge (70) produisant un signal d'horloge de synchronisation pour commander simultanément tant le fonctionnement du huitième moyen (64) que le fonctionnement du sixième moyen (69).

**Patentansprüche**

1. Digitale Prozessorschaltung mit:
einer ersten Vorrichtung (63) zum Speichern des Multiplikanden;
einer zweiten Vorrichtung (62) zum Speichern des Multiplikators;
einer dritten Vorrichtung (65) zum Dekodieren des aus der zweiten Vorrichtung ausgelesenen Multiplikators entsprechend dem Booth's Algorithmus, um dadurch Koeffizienten zu erzeugen;
einer vierten Vorrichtung (66), die mit der dritten und der ersten Vorrichtung gekoppelt ist, um durch Multiplikation des Multiplikanden mit den Koeffizienten Partial-produkte zu erzeugen;
einer fünften Vorrichtung (67) mit einem ersten und einem zweiten Eingangsabschnitt zum Durchführen einer Addition eines ersten und zweiten Eingangswertes, der am ersten bzw. zweiten Eingangsabschnitt empfangen wird, wobei der erste Eingangsabschnitt mit der vierten Vorrichtung verbunden ist und die Partialprodukte als den ersten Eingangswert empfängt;
einer sechsten Vorrichtung (69) zum Empfangen des Additionsresultates von der fünften Vorrichtung und zum Zurückführen dieses Resultates an den zweiten Eingangsabschnitt der fünften Vorrichtung als den zweiten Eingangswert der fünften Vorrichtung; und
einer siebten Vorrichtung (68), die mit der fünften Vorrichtung oder der sechsten Vorrichtung gekoppelt ist, um das Multiplikationsresultat auszugeben,
dadurch gekennzeichnet, daß sie ferner aufweist eine achte Vorrichtung (64), die zwischen der zweiten Vorrichtung (62) und der dritten Vorrichtung (65) gekoppelt ist, um den Multiplikator von der zweiten Vorrichtung (62) zu empfangen, und gleichzeitig eine Vielzahl von aufeinanderfolgenden Bits des empfangenen Multiplikators parallel zur dritten Vorrichtung (65) zu übersenden, wobei die achte Vorrichtung (64) einen Schaltkreis ($Y_{i-1}$) enthält, der die Funktion hat, zeitweise ein Bit innerhalb der aufeinanderfolgenden Bits zu speichern, welche vorher zur dritten Vorrichtung (65) gesendet wurden, und das gespeicherte Bit im nächsten Takt (timing) zusammen mit einer Vielzahl der zu sendenden Bits an die dritte Vorrichtung (65) zu übersenden.

2. Digitale Prozessorschaltung nach Anspruch 1, dadurch gekennzeichnet, daß sie ferner aufweist, einen Taktgenerator (70) zum Erzeugen eines Taktsignals zum gleichzeitigen Steuern sowohl des Betriebs der achten Vorrichtung (64), als auch der sechsten Vorrichtung (69).

# F i g.1
## ( PRIOR ART )

# F i g.2
## ( PRIOR ART )

# Fig.3

# Fig.4

# Fig.5

# Fig.6

**12** MULTIPLIER PARALLEL SHIFT REGISTER

$Y_1$    $Y_3$    $Y_5$

21

BOOTH'S DECODER

13    22    25

$Y_0$    $Y_2$    $Y_4$    CK

24

# Fig.7

18

12    $Y_0 , Y_1 , Y_2$    $Y_2 , Y_3 , Y_4$    $Y_4 , Y_5 , Y_6$

16    $P_1$    $P_1 + P_2$    $P_1 + P_2 + P_3$

17    $P_1$    $P_1 + P_2$

Fig.8

Fig.9

Fig.10

Fig.11

# F i g.12

a)                    b)

# F i g.13

# F i g.14